# DEMANDE DE BREVET EUROPEEN

(11) **EP 1 753 170 A1**
(43) Date de publication de la demande: **14.02.2007**
(21) Numéro de dépôt: 06117524.6
(22) Date de dépôt: 19.07.2006
(51) Int. Cl.: H04L 12/26, H04L 12/24

(54) **Dispositif de contrôle d'indicateurs de performances d'un réseau de commmunication, pour un outil de gestion et/ou d'optimisation de réseau**

(30) Priorité: 09.08.2005 FR 0552467
(71) Demandeur: ALCATEL, 75008 Paris (FR)
(72) Inventeur: Delegue, Gérard, 94230, CACHAN (FR); Betge-Brezetz, Stéphane, 75015, PARIS (FR); Gonguet, Arnaud, 75013, PARIS (FR); Robinson, Julien, 75014, PARIS (FR); Fournigault, Lionel, 91190, GIF SUR YVETTE (FR)
(74) Mandataire: El Manouni, Josiane

(57) **Abrégé**

Un dispositif (D) est dédié au contrôle d'indicateurs, représentatifs des performances d'un réseau de communication (RC,RAR) et utilisables par un outil de gestion et/ou d'optimisation (OO) de ce réseau. Ce dispositif (D) comprend des moyens de contrôle (MC) chargés, lorsqu'ils reçoivent une formule définissant un indicateur et constituée de grandeurs choisies parmi des variables et des paramètres et combinées au moyen d'opérateurs, i) de contrôler l'homogénéité de cette formule en termes d'unités et/ou de sémantique, au moyen de premières données représentatives des unités des grandeurs qu'elle combine et/ou de la sémantique de certaines au moins des grandeurs, et ii) en cas de détection d'hétérogénéité(s), de corriger chaque hétérogénéité compte tenu des premières données, afin de délivrer une formule corrigée, homogène en termes d'unités et/ou de sémantique.

## Description

L'invention concerne les réseaux de communication, et plus précisément la gestion et/ou l'optimisation des performances de tels réseaux.

Comme le sait l'homme de l'art, la gestion et/ou l'optimisation des performances d'un réseau de communication se fait au moyen d'outils de gestion et/ou d'optimisation de réseau, comme par exemple celui appelé RNO® (pour « Radio Network Optimization »), développé par la société ALCATEL pour les réseaux radio cellulaires. Ces outils utilisent, notamment, de nombreuses données de fonctionnement, souvent appelées compteurs, comme par exemple des données de trafic qui définissent les trafics qui passent par des éléments de réseau et qui impliquent des terminaux de communication, éventuellement mobiles, ou des paramètres de réseau.

Il existe plusieurs types de compteurs, comme par exemple les compteurs cumulatifs ou les jauges (variables dynamiques qui sont utilisées lorsque les données à mesurer peuvent varier autour d'une valeur centrale pendant la période de mesure). Ce sont des grandeurs qui peuvent être mesurées ou estimées au sein du réseau par un système de gestion de réseau, comme par exemple un NMS (pour « Network Management System »). On entend ici par « élément de réseau » tout constituant (physique et/ou logique) d'un réseau par lequel passent des trafics. Il pourra donc s'agir, par exemple, d'une cellule dans laquelle des terminaux mobiles peuvent établir ou poursuivre des communications, ou d'un équipement de réseau, tel qu'un routeur ou une station de base (BTS ou Node B).

Ces compteurs permettent de quantifier des événements survenant au sein du réseau au moyen d'unités spécifiques, comme par exemple les bits, les kilobits, les mégabits, les secondes, les minutes ou les heures.

Le grand nombre de compteurs collectés rend difficile la gestion des performances des réseaux, notamment du fait que les compteurs peuvent varier d'un constructeur à l'autre ou d'une version à l'autre d'un même équipement ou élément. Pour remédier à cet inconvénient, les opérateurs des réseaux utilisent des indicateurs, par exemple de qualité de service (QoS), fonction de compteurs et/ou d'autres indicateurs ainsi qu'éventuellement d'autres données, comme par exemple des paramètres de configuration de réseau. Ces indicateurs permettent de définir des grandeurs indépendantes des matériels et des versions logicielles, et donc de masquer les différences entre compteurs.

Pour concevoir un indicateur, un opérateur doit i) définir une formule mathématique combinant ensemble des paramètres et/ou variables (compteurs, indicateurs), ii) vérifier manuellement que cette formule est homogène pour ce qui concerne les unités et/ou la sémantique de ces variables et/ou paramètres (par exemple il faut éviter d'additionner des éléments donnés en bits avec des éléments donnés en mégabits ou en heure), iii) effectuer manuellement des conversions d'unités afin que les indicateurs puissent être calculés à partir de données homogènes, et iv) déterminer manuellement les unités des nouveaux indicateurs. En d'autres termes, il n'y a pas d'adaptation dynamique des unités des indicateurs.

Par ailleurs, le travail que nécessitent la définition et le contrôle manuels des indicateurs augmente sensiblement les coûts de gestion et d'optimisation des réseaux.

En outre, la définition manuelle des indicateurs peut, lorsque les unités sont hétérogènes, introduire des erreurs parmi les valeurs des indicateurs, qui sont stockés par les outils de gestion et/ou d'optimisation, lesquelles peuvent s'avérer difficile à corriger, voire même à détecter. Il n'est en effet pas toujours possible de re-calculer des valeurs d'indicateurs stockées après avoir corrigé manuellement une formule.

L'invention a donc pour but d'améliorer la situation, en particulier, mais de façon non exclusive, pour la gestion et/ou l'optimisation des performances des réseaux radio mobiles (ou cellulaires) comportant des ensembles d'équipements radio hétérogènes (c'est-à-dire de technologies différentes).

Elle propose à cet effet un dispositif dédié au contrôle d'indicateurs représentatifs des performances d'un réseau de communication, pour un outil de gestion et/ou d'optimisation de ce réseau de communication.

Ce dispositif de contrôle d'indicateurs se caractérise par le fait qu'il comprend des moyens de contrôle chargés, lorsqu'ils reçoivent une formule définissant un indicateur et constituée de grandeurs choisies parmi des variables et des paramètres et combinées au moyen d'opérateurs, d'une part, de contrôler l'homogénéité de cette formule en termes d'unités (de mesure) et/ou de sémantique, au moyen de premières données représentatives des unités des grandeurs qu'elle combine et/ou de la sémantique de certaines au moins des grandeurs, et d'autre part, en cas de détection d'hétérogénéité(s), de corriger chaque hétérogénéité compte tenu des premières données, afin de délivrer une formule corrigée, homogène en termes d'unités et/ou de sémantique.

On entend ici par « grandeur » aussi bien des variables, comme par exemple des compteurs ou des indicateurs, que des paramètres, comme par exemple des paramètres de configuration de réseau.

Le dispositif selon l'invention peut comporter d'autres caractéristiques qui peuvent être prises séparément ou en combinaison, et notamment :
- ses moyens de contrôle peuvent être chargés de déterminer, à partir des premières données, une unité pour un indicateur défini par une formule contrôlée et éventuellement corrigée, et de délivrer des deuxièmes données représentatives de cette formule et associées à des premières données représentatives de l'unité déterminée de la formule ;
- il peut comprendre des premiers moyens de mémorisation pour stocker les premières données représentatives des unités des grandeurs de type compteur et/ou de la sémantique des grandeurs ;
- il peut comprendre des deuxièmes moyens de mémorisation pour stocker les premières données représentatives des unités des grandeurs de typeindicateur et les deuxièmes données représentatives des formules associées. Dans ce cas, ses moyens de contrôle sont chargés de stocker dans les deuxièmes moyens de mémorisation les premières et deuxièmes données associées qu'ils délivrent et qui sont représentatives d'une formule et de son unité ;
- il peut comprendre des moyens d'adaptation chargés, lorsqu'une valeur d'indicateur est demandée, de collecter cette valeur dans l'outil, et de délivrer cette valeur collectée après l'avoir éventuellement modifiée en fonction d'une unité choisie et/ou d'un intervalle de valeurs défini ;
   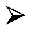 ses moyens d'adaptation peuvent être chargés de délivrer la valeur collectée après l'avoir éventuellement modifiée en fonction des premières données représentatives de l'unité de son indicateur (stockées dans les deuxièmes moyens de mémorisation) ;
   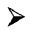 ses moyens d'adaptation peuvent être chargés de délivrer la valeur collectée après l'avoir éventuellement modifiée en fonction de troisièmes données représentatives d'un intervalle de valeurs, éventuellement défini par rapport à une unité choisie ;
      - il peut comprendre des troisièmes moyens de mémorisation pour stocker les troisièmes données ;
- il peut comprendre des moyens d'interface homme/machine permettant à un utilisateur de fournir au moins les unités des grandeurs de type compteur et/ou la sémantique des grandeurs ;
   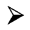 ses moyens d'interface homme/machine peuvent permettre à un utilisateur de fournir une formule à contrôler et/ou l'unité d'un indicateur dont la formule doit être contrôlée ;
   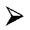 ses moyens d'interface homme/machine peuvent permettre à un utilisateur de fournir un intervalle de valeurs choisi pour une valeur d'indicateur à fournir.

L'invention propose également un outil de gestion et/ou d'optimisation, pour un réseau de communication, comprenant un dispositif de contrôle d'indicateurs du type de celui présenté ci-avant.

Cet outil comprend par exemple des moyens de calcul chargés de calculer une valeur d'indicateur à partir des deuxièmes données qui représentent la formule de cet indicateur (lesquelles sont stockées dans les deuxièmes moyens de mémorisation du dispositif), et des valeurs des grandeurs intervenant dans cette formule.

L'invention est particulièrement bien adaptée, bien que de façon non exclusive, aux réseaux de communication radio, notamment de type cellulaire (ou mobile). Elle concerne d'une manière générale tout type de réseau de communication, y compris les réseaux fixes commutés (plus connus sous les acronymes anglais POTS (pour « Plain Old Telephone Service ») et PSTN (pour « Public Switched Telephony Network »)), ainsi que les réseaux locaux filaires (plus connus sous l'acronyme anglais LAN (pour « Local Area Network »)) ou sans fil (plus connus sous l'acronyme anglais WLAN (pour « Wireless LAN »)).

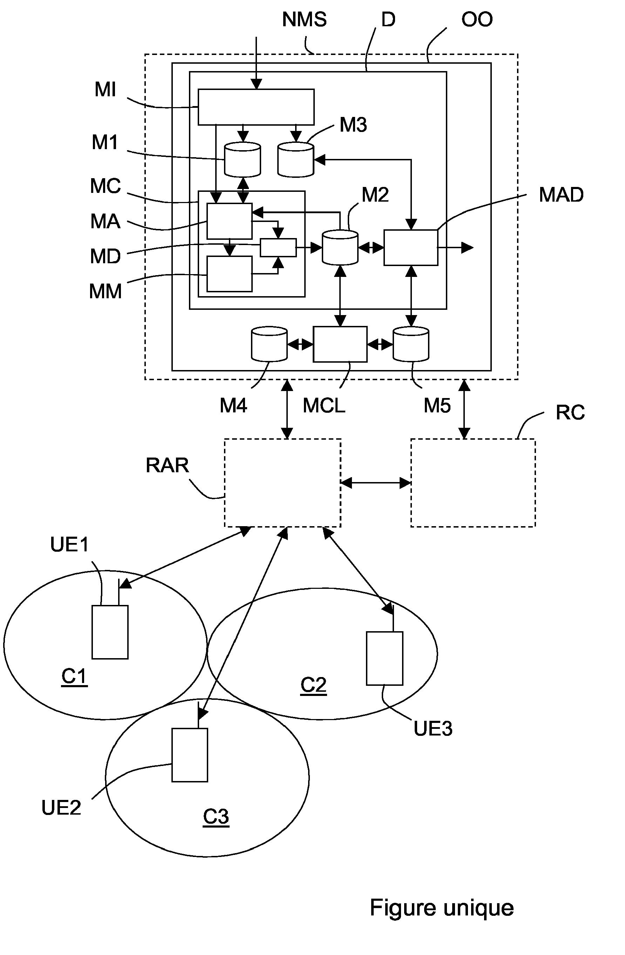

D'autres caractéristiques et avantages de l'invention apparaîtront à l'examen de la description détaillée ci-après, et du dessin annexé, sur lequel l'unique figure illustre de façon très schématique et fonctionnelle un réseau de communication cellulaire équipé d'un outil d'optimisation et/ou de gestion de réseau muni d'un exemple de réalisation d'un dispositif de contrôle d'indicateurs selon l'invention. Le dessin annexé pourra non seulement servir à compléter l'invention, mais aussi contribuer à sa définition, le cas échéant.

L'invention a pour objet de permettre un contrôle automatisé de l'homogénéité des formules définissant les indicateurs utilisés par des outils de gestion et/ou d'optimisation des performances de réseaux de communication.

On considère dans ce qui suit que le réseau de communication est un réseau radio cellulaire (ou mobile), comme par exemple un réseau GSM, ou GPRS/EDGE, ou encore UMTS ou WiMax. Mais, l'invention est adaptée à tout type de réseau de communication, et notamment aux réseaux fixes commutés (POTS ou PSTN) et aux réseaux locaux filaires (LAN) ou sans fil (WLAN).

Comme cela est illustré sur l'unique figure, un réseau radio cellulaire peut, d'une façon très schématique mais néanmoins suffisante à la compréhension de l'invention, être résumé à un réseau de commutation (ou « Core Network ») RC couplé à un réseau d'accès radio RAR (appelé UTRAN dans le cas d'un réseau UMTS et BSS dans le cas d'un réseau GSM), lui-même raccordé à un système de gestion de réseau NMS (pour « Network Management System »).

Le réseau d'accès radio RAR comporte des stations de base (appelées Node Bs dans le cas d'un réseau UMTS et BTSs dans le cas d'un réseau GSM) et des contrôleurs de réseau radio ou noeuds (appelés RNCs dans le cas d'un réseau UMTS et BSCs dans le cas d'un réseau GSM), raccordés entre eux ainsi qu'à un gestionnaire de réseau d'accès. Les stations de base sont par ailleurs reliées au système de gestion de réseau NMS via les contrôleurs de réseau radio.

Chaque station de base (Node B ou BTS) est associée à au moins une cellule Ci couvrant une zone radio dans laquelle des terminaux mobiles UEj peuvent établir (ou poursuivre) des liaisons radio.

On entend ici par « terminal mobile » tout terminal de communication mobile ou portable capable d'échanger des données sous la forme de signaux radio, soit avec un autre terminal ou équipement de réseau, via leur(s) réseau(x) de rattachement, soit avec son propre réseau de rattachement. Il pourra donc s'agir, par exemple, de téléphones mobiles, ou d'ordinateurs fixes ou portables ou d'assistants personnels numériques (ou PDA) équipés d'un module de communication radio.

Dans l'exemple illustré, trois cellules (C1-C3, i = 1 à 3) ont été représentées. Mais, l'indice i peut prendre n'importe quelle valeur non nulle. Par ailleurs, dans l'exemple illustré, trois terminaux mobiles (UE1-UE3, j = 1 à 3) ont été représentés. Mais, l'indice j peut prendre n'importe quelle valeur non nulle.

Le réseau de commutation RC comprend des équipements de réseau raccordés aux contrôleurs de réseau radio (RNCs ou BSCs), à un gestionnaire de réseau, ainsi qu'au système de gestion de réseau NMS.

Afin de permettre la gestion et/ou l'optimisation des performances du réseau radio (cellulaire), le système de gestion de réseau NMS comprend (ou est couplé à) un outil d'optimisation et/ou de gestion de réseau 00, comme par exemple le système RNO® présenté dans la partie introductive.

L'invention propose un dispositif de contrôle d'indicateurs D destiné au moins à mettre des formules d'indicateurs homogènes (en termes d'unités et/ou de sémantique) à la disposition de l'outil de gestion et/ou d'optimisation de réseau 00, afin qu'il calcule des valeurs d'indicateurs nécessaires à la gestion et/ou l'optimisation du réseau. Dans l'exemple de réalisation illustré, non limitatif, le dispositif de contrôle D est intégré dans l'outil de gestion et/ou d'optimisation de réseau 00, mais dans une variante il pourrait être couplé à ce dernier.

Il est rappelé que l'on entend ici par « indicateur » une grandeur définie par une formule mathématique combinant ensemble des paramètres et/ou des variables au moyen d'opérateurs mathématiques de tout type comme par exemple une addition, une soustraction, une division ou une multiplication, ou un opérateur d'agrégation, tel qu'une moyenne, un minimum, un maximum ou un comptage d'éléments. Par ailleurs, on entend ici par « variable » un compteur, comme par exemple des données de trafic qui définissent les trafics qui passent par des éléments de réseau et qui impliquent des terminaux de communication UEj (par exemple un nombre de paquets perdus), ou un indicateur. En outre, on entend ici par « paramètre » des données de configuration du réseau, comme par exemple un nombre de cellules adjacentes.

Le dispositif de contrôle D, selon l'invention, comprend au moins un module de contrôle MC chargé, chaque fois qu'il reçoit une formule définissant un indicateur, de contrôler l'homogénéité de cette formule en termes d'unités et/ou de sémantique, au moyen de premières données représentatives des unités des grandeurs qui sont combinées dans cette formule et/ou de la sémantique de certaines au moins de ces grandeurs. Ce contrôle est par exemple effectué par un sous-module d'analyse MA.

On entend ici par « unité » une unité de mesure, c'est-à-dire une quantité permettant de servir de terme de comparaison à des quantités de même espèce (ou type). Il s'agira donc, par exemple, de bits, kilobits ou mégabits, ou bien de secondes, de minutes, d'heures, de jours, de semaines, ou de mois.

Par ailleurs, on entend ici par « contrôler l'homogénéité d'une formule en termes d'unités » le fait de vérifier si les grandeurs, qui sont combinées au moyen d'opérateurs pour constituer une formule, ont des unités homogènes entre elles.

Par exemple, lorsqu'une formule comporte une somme, une soustraction, une multiplication ou une division de compteurs, le sous-module d'analyse MA doit vérifier si les unités de ces compteurs sont les mêmes. On ne peut pas par exemple additionner directement un compteur en bits avec un autre compteur en mégabits.

De plus, on entend ici par « contrôler l'homogénéité d'une formule en termes de sémantique » le fait de vérifier si l'application d'un opérateur à des grandeurs, dans une formule, présente un sens physique compte tenu du domaine technique concerné. Par exemple, si un indicateur I1 est défini par la valeur moyenne d'un rapport entre deux compteurs C1 et C2 (formule : I1 = valeur moyenne (C1/C2)), cette dernière formule n'a pas de sens physique dans le domaine des télécommunications, ce qui constitue une hétérogénéité au sens de l'invention en termes de sémantique. L'indicateur I1 devrait donc être défini par le rapport entre la valeur moyenne du compteur C1 et la valeur moyenne du compteur C2 (formule : I1 = valeur moyenne de C1 / valeur moyenne de C2).

Le module de contrôle MC est également chargé, chaque fois que son sous-module d'analyse MA a détecté une hétérogénéité (d'unités et/ou de sémantique), de corriger chaque hétérogénéité compte tenu des premières données, afin de délivrer une formule corrigée, homogène en termes d'unités et/ou de sémantique. Ces corrections sont par exemple effectuées par un sous-module de correction MM.

On entend ici par « corriger » le fait de rendre une formule homogène en termes d'unités et/ou de sémantique. Par exemple, si une formule comprend la somme d'un compteur C1 en bits et d'un autre compteur C2 en kilobits (soit C1/C2), alors le sous-module de correction MM remplace ce rapport C1/C2 par un rapport du type (0,001*C1)/C2 ou bien du type C1/(1000*C2), selon les unités des éventuelles autres grandeurs de la formule, afin que cette formule soit homogène en termes d'unités. Si maintenant une formule comprend la valeur moyenne d'un rapport entre deux compteurs C1 et C2 (valeur moyenne (C1/C2)), alors le sous-module de correction MM remplace cette valeur moyenne de rapport par le rapport entre la valeur moyenne du compteur C1 et la valeur moyenne du compteur C2 (valeur moyenne de C1 / valeur moyenne de C2), afin que cette formule soit homogène en termes de sémantique.

Il est important de noter que le sous-module de correction MM peut modifier une grandeur ou une opération sur des grandeurs à la fois sur le plan de l'homogénéité d'unités et sur le plan de l'homogénéité de sémantique. Par exemple, si une formule comprend une valeur moyenne d'un rapport C1/C2, avec C1 en bits et C2 en kilobits, alors le sous-module de correction MM remplace cette valeur moyenne de rapport par un rapport de valeurs moyennes du type [valeur moyenne de (0,001*C1) / valeur moyenne de C2] ou bien du type [valeur moyenne de C1 / valeur moyenne de (1000*C2)].

Les premières données, qui sont représentatives des unités des grandeurs et/ou de la sémantique de certaines au moins des grandeurs, sont par exemple stockées dans des premiers moyens de mémorisation M1 du dispositif D. Ces premiers moyens de mémorisation M1 sont alors couplés au module de contrôle MC et peuvent se présenter sous n'importe quelle forme, comme par exemple une mémoire (comme ce sera le cas ci-après) ou une base de données.

Cette première mémoire M1 est par exemple alimentée en premières données par un utilisateur du dispositif D (ou de l'outil 00), via une interface de type homme/machine MI. Dans l'exemple illustré, cette interface homme/ machine MI fait partie du dispositif D, mais cela n'est pas obligatoire. Elle pourrait en effet être implantée dans l'outil 00 ou bien dans le NMS.

Grâce à cette interface homme/machine MI, l'utilisateur peut fournir au dispositif D les unités des grandeurs de type compteur et/ou la sémantique des grandeurs, lesquelles sont ensuite transformées par l'interface homme/ machine MI en premières données qu'elle stocke dans la première mémoire M1.

Cette interface homme/machine MI peut également permettre à l'utilisateur de fournir des formules à contrôler. Dans ce cas, l'interface homme/machine MI transmet au module de contrôle MC les données qui définissent chaque formule qui lui est fournie par l'utilisateur afin qu'il procède à son contrôle. Mais, cela n'est pas obligatoire, on peut en effet envisager que les formules soient directement transmises au module de contrôle MC par l'outil 00, par exemple. Le module de contrôle MC peut être également chargé de déterminer une unité appropriée pour un indicateur défini par une formule qu'il a contrôlée et éventuellement corrigée. Pour ce faire, le module de contrôle MC comporte par exemple un sous-module de détermination MD chargé de déterminer l'unité qui lui parait appropriée pour un indicateur, compte tenu des unités (éventuellement stockées sous forme de premières données dans la première mémoire M1) des grandeurs qui sont combinées dans sa formule, laquelle est fournie sous la forme de deuxièmes données par le sous-module d'analyse MA (en l'absence de correction) ou par le sous-module de correction MM (en cas de correction).

Dans ce cas, une fois que le sous-module de détermination MD a déterminé une unité appropriée pour un indicateur, il délivre sur sa sortie les deuxièmes données (représentatives de la formule de cet indicateur) associées à des premières données représentatives de cette unité appropriée.

Il est important de noter, qu'en variante ou en complément, l'unité d'un indicateur peut être communiquée au module de contrôle MC en même temps que les données qui définissent sa formule. Par exemple, cette unité d'indicateur peut être fournie par l'utilisateur du dispositif D (ou de l'outil 00) via l'interface homme/machine MI. Lorsque le module de contrôle MC dispose de l'unité d'un indicateur au début du contrôle de sa formule, il procède à l'éventuelle correction de cette formule en fonction de l'unité imposée. Par conséquent, le sous-module de détermination MD n'intervient pas et c'est le sous-module de correction MM qui délivre sur sa sortie les deuxièmes données (représentatives de la formule corrigée de l'indicateur) associées à des premières données représentatives de l'unité imposée.

Le dispositif D comprend préférentiellement des deuxièmes moyens de mémorisation M2 dans lesquels sont stockées les premières données représentatives des unités des grandeurs de type indicateur et les deuxièmes données représentatives des formules qui sont associées à ces grandeurs. Ces deuxièmes moyens de mémorisation M2 sont alors couplés au module de contrôle MC et peuvent se présenter sous n'importe quelle forme, comme par exemple une mémoire (comme ce sera le cas ci-après) ou une base de données.

Dans ce cas, le module de contrôle MC se charge de stocker dans la deuxième mémoire M2 les premières et deuxièmes données associées qu'il délivre et qui sont représentatives d'une formule et de son unité.

Il est important de noter que les premières données, qui sont représentatives des unités des indicateurs contrôlés, sont utilisées par le module de contrôle MC (et plus précisément par ses sous-module de détermination MD et sous-module de correction MM) lorsqu'il procède au contrôle de la formule d'un indicateur défini à partir d'au moins un autre indicateur connu (et déjà contrôlé).

Les formules d'indicateurs contrôlées, définies par les premières et deuxièmes données stockées, par exemple, dans la deuxième mémoire M2, peuvent alors être utilisées par l'outil de gestion et/ou d'optimisation 00 pour calculer des valeurs d'indicateurs à partir de valeurs de grandeurs (compteur(s), indicateur(s), paramètre(s)) collectées, par exemple dans le NMS.

A cet effet, l'outil de gestion et/ou d'optimisation 00 comprend un module de calcul MCL couplé à la deuxième mémoire M2 afin d'extraire de celle-ci chaque formule d'indicateur dont elle doit calculer la valeur.

L'outil 00 comprend par exemple des (quatrièmes) moyens de mémorisation M4 dans lesquels sont stockées les valeurs des compteurs et des (cinquièmes) moyens de mémorisation M5 dans lesquels sont stockées les valeurs des indicateurs. Ces quatrièmes M4 et cinquièmes M5 moyens de mémorisation sont couplés au module de calcul MCL et peuvent se présenter sous n'importe quelle forme, comme par exemple une mémoire (comme ce sera le cas ci-après) ou une base de données.

Une fois que le module de calcul MCL a déterminé une valeur d'indicateur, il stocke cette valeur dans la cinquième mémoire M5 en ècorrespondance des données représentatives de l'indicateur correspondant.

L'utilisateur ou l'outil 00 pouvant avoir besoin de disposer d'une valeur d'indicateur dans une unité particulière choisie ou préférentielle (représentée par des troisièmes données), le dispositif D peut comprendre un module d'adaptation MAD chargé, chaque fois qu'une valeur d'indicateur est demandée, de collecter cette valeur dans l'outil 00 (par exemple dans sa cinquième mémoire M5) avec son unité de stockage, puis de déterminer si cette unité de stockage correspond à l'unité particulière demandée.

Il est important de noter que l'unité particulière choisie peut être éventuellement définie par l'intermédiaire d'un intervalle de valeurs représenté par des troisièmes données. On peut par exemple souhaiter disposer d'une valeur d'indicateur dans un intervalle de valeurs, comme par exemple entre 0 et 1000.

Les troisièmes données qui définissent une unité particulière choisie ou un intervalle de valeurs peuvent être fournies par l'utilisateur du dispositif D (ou de l'outil 00) via l'interface homme/machine MI, ou bien directement par l'outil 00. Ces troisièmes données peuvent être stockées en correspondance de données représentatives de l'indicateur concerné dans des troisièmes moyens de mémorisation M3 du dispositif D. Ces troisièmes moyens de mémorisation M3 sont par exemple couplés à l'interface homme/machine MI et au module d'adaptation MAD comme c'est le cas dans l'exemple illustré sur l'unique figure. Ils peuvent se présenter sous n'importe quelle forme, comme par exemple une mémoire (comme ce sera le cas ci-après) ou une base de données.

Dans ce cas, le module d'adaptation MAD accède à la troisième mémoire M3 du dispositif D pour extraire les troisièmes données qui définissent l'unité particulière requise ou l'intervalle de valeurs requis pour l'indicateur dont la valeur est demandée. Puis il procède à la comparaison précitée.

Si les unité de stockage et unité particulière sont identiques, alors le module d'adaptation MAD délivre sur sa sortie la valeur collectée dans l'outil 00 sans la modifier. Dans le cas contraire, le module d'adaptation MAD transforme (ou convertit) la valeur collectée dans l'outil 00 afin qu'elle corresponde à l'unité particulière, puis il délivre sur sa sortie la valeur d'indicateur transformée.

On peut également envisager que l'utilisateur ou l'outil 00 requière une valeur d'indicateur sans demander d'unité spécifique. Dans ce cas, le module d'adaptation MAD extrait la valeur d'indicateur de l'outil 00 (par exemple de sa cinquième mémoire M5). Puis, il compare cette unité de stockage avec l'unité qui est stockée sous la forme de premières données dans la deuxième mémoire M2 en correspondance de la formule de l'indicateur concerné. Si les unité de stockage et unité associée à la formule sont identiques, alors le module d'adaptation MAD délivre sur sa sortie la valeur collectée dans l'outil 00 sans la modifier. Dans le cas contraire, le module d'adaptation MAD transforme (ou convertit) la valeur collectée dans l'outil 00 afin qu'elle corresponde à l'unité associée à la formule, puis il délivre sur sa sortie la valeur d'indicateur transformée.

Le module d'adaptation MAD peut être agencé de manière à délivrer sur sa sortie des valeurs d'indicateurs, éventuellement transformées, dans un format permettant leur affichage sur un écran de l'outil 00 ou bien du NMS, éventuellement via l'interface homme/machine MI.

Le dispositif de contrôle d'indicateurs D selon l'invention, et notamment son module de contrôle MC, ses éventuelles mémoires M1 à M3 et son éventuel module d'adaptation MAD, peuvent être réalisés sous la forme de circuits électroniques, de modules logiciels (ou informatiques), ou d'une combinaison de circuits et de logiciels.

L'invention présente un certain nombre d'avantages, parmi lesquels :
- la mise à disposition, notamment d'un outil de gestion et/ou d'optimisation de réseau, de formules d'indicateurs homogènes en termes d'unités et/ou de sémantique, c'est-à-dire physiquement signifiantes,
- la réduction du temps nécessaire à un opérateur pour définir et contrôler des formules d'indicateurs, et donc la réduction des coûts de gestion et/ou d'optimisation,
- la simplification de l'analyse des indicateurs du fait de l'adaptation de leurs unités en fonction de leurs valeurs.

L'invention ne se limite pas aux modes de réalisation de dispositif de contrôle d'indicateurs et d'outil de gestion et/ou d'optimisation de réseau décrits ci-avant, seulement à titre d'exemple, mais elle englobe toutes les variantes que pourra envisager l'homme de l'art dans le cadre des revendications ci-après.

## Revendications

1. Dispositif (D) de contrôle d'indicateurs représentatifs des performances d'un réseau de communication, pour un outil de gestion et/ou d'optimisation (OO) dudit réseau de communication, **caractérisé en ce qu'**il comprend des moyens de contrôle (MC) agencés, en cas de réception d'une formule définissant un indicateur et constituée de grandeurs choisies parmi des variables et des paramètres et combinées au moyen d'opérateurs, i) pour contrôler l'homogénéité de ladite formule en termes d'unités et/ou de sémantique, au moyen de premières données représentatives des unités des grandeurs qu'elle combine et/ou de la sémantique de certaines au moins des grandeurs, et ii) en cas de détection d'hétérogénéité(s), pour corriger chaque hétérogénéité compte tenu desdites premières données et délivrer une formule corrigée, homogène en termes d'unités et/ou de sémantique.

2. Dispositif selon la revendication 1, **caractérisé en ce que** lesdits moyens de contrôle (MC) sont agencés pour déterminer, à partir desdites premières données, une unité pour l'indicateur défini par une formule contrôlée et éventuellement corrigée, et délivrer des deuxièmes données représentatives de cette formule et associées à des premières données représentatives de l'unité déterminée de ladite formule.

3. Dispositif selon l'une des revendications 1 et 2, **caractérisé en ce qu'**il comprend des premiers moyens de mémorisation (M1) propres à stocker lesdites premières données représentatives des unités des grandeurs de type compteur et/ou de la sémantique des grandeurs.

4. Dispositif selon l'une des revendications 2 et 3, **caractérisé en ce qu'**il comprend des deuxièmes moyens de mémorisation (M2) propres à stocker lesdites premières données représentatives des unités des grandeurs de type indicateur et les deuxièmes données représentatives des formules associées, et **en ce que** lesdits moyens de contrôle (MC) sont agencés pour stocker dans lesdits deuxièmes moyens de mémorisation (M2) les premières et deuxièmes données associées qu'ils délivrent et qui sont représentatives d'une formule et de son unité.

5. Dispositif selon l'une des revendications 1 à 4, **caractérisé en ce qu'**il comprend des moyens d'adaptation (MAD) agencés, en cas de demande de fourniture d'une valeur d'indicateur, pour collecter cette valeur dans ledit outil (00), et pour délivrer cette valeur collectée après l'avoir éventuellement modifiée en fonction d'une unité choisie et/ou d'un intervalle de valeurs défini.

6. Dispositif selon la combinaison des revendications 4 et 5, **caractérisé en ce que** lesdits moyens d'adaptation (MAD) sont agencés pour délivrer ladite valeur collectée après l'avoir éventuellement modifiée en fonction des premières données représentatives de l'unité de son indicateur, stockées dans lesdits deuxièmes moyens de mémorisation (M2).

7. Dispositif selon l'une des revendications 5 et 6, **caractérisé en ce que** lesdits moyens d'adaptation (MAD) sont agencés pour délivrer ladite valeur collectée après l'avoir éventuellement modifiée en fonction de troisièmes données représentatives d'un intervalle de valeurs.

8. Dispositif selon la revendication 7, **caractérisé en ce qu'**il comprend des troisièmes moyens de mémorisation (M3) propres à stocker lesdites troisièmes données.

9. Dispositif selon l'une des revendications 1 à 8, **caractérisé en ce qu'**il comprend des moyens d'interface homme/machine (MI) agencés pour permettre à un utilisateur de fournir au moins les unités des grandeurs de type compteur et/ou la sémantique des grandeurs.

10. Dispositif selon la revendication 9, **caractérisé en ce que** lesdits moyens d'interface homme/machine (MI) sont agencés pour permettre à un utilisateur de fournir une formule à contrôler et/ou l'unité d'un indicateur dont la formule doit être contrôlée.

11. Dispositif selon l'une des revendications 7 et 8 en combinaison avec l'une des revendications 9 et 10, **caractérisé en ce que** lesdits moyens d'interface homme/machine (MI) sont agencés pour permettre à un utilisateur de fournir un intervalle de valeurs choisi pour une valeur d'indicateur à délivrer.

12. Outil de gestion et/ou d'optimisation (OO) pour un réseau de communication, **caractérisé en ce qu'**il comprend un dispositif de contrôle d'indicateurs (D) selon l'une des revendications précédentes.

13. Outil selon la revendication 12, **caractérisé en ce qu'**il comprend des moyens de calcul (MCL) agencés pour calculer une valeur d'indicateur à partir des deuxièmes données représentatives de la formule de cet indicateur, stockées dans lesdits deuxièmes moyens de mémorisation (M2) dudit dispositif (D), et des valeurs des grandeurs intervenant dans cette formule.
